# EUROPEAN PATENT APPLICATION

(11) **EP 0 849 193 A1**
(43) Date of publication of application: **24.06.1998**
(21) Application number: 97203944.0
(22) Date of filing: 15.12.1997
(51) Int. Cl.: B65G 1/137

(54) **Wheel-mounted device for supporting product containers for preordered withdrawal**

(30) Priority: 19.12.1996 IT MI962669
(71) Applicant: SITMA S.p.A., I-41057 Spilamberto, Modena (IT)
(72) Inventor: Ballestrazzi, Aris, 41056 Savignano Sul Panaro (Modena) (IT); Tassi, Lamberto, 41056 Savignano Sul Panaro (Modena) (IT)
(74) Representative: De Gregori, Antonella

(57) **Abstract**

A wheel-mounted device for supporting product containers for preordered withdrawal which is connectable to a store truck and comprises a frame (20) on which there is provided a stepwise-rotating turn-cage (24, 25) carrying a plurality of support plates (31) on which containers for products (15) are located, the turn-cage being rotated stepwise by a first motorized (at 29) linkage (26, 27, 28) and being also provided with a second linkage (32, 33, 34, 35, 36) which counter-rotates the plurality of support plates (31) to maintain them in a nearly horizontal position at each moment during the rotation of said turn-cage. Each of the support plates (31) is preferably provided with a roller table (37) on which a respective container (15) rests.

## Description

This invention relates to a wheel-mounted device for supporting product containers for preordered withdrawal.

Current industries comprise stores for products or product parts of any kind, which are stored for withdrawal either for normal production or for distribution on the basis of customer requirements. Ease of withdrawal and handling of such products or product parts is important so that the various requirements are satisfied as quickly as possible, for this purpose appropriate containers being used where possible. In general these containers, known as baskets, are of box shape to receive the products withdrawn one after another. Such an operation is performed in accordance with preordered withdrawal known as picking, the containers being known as picking baskets.

During this picking, the operator preferably uses a mechanical store truck such as a shuttle truck. This vehicle is used both for moving through the store aisles between the various shelves and for raising the operator to the level of the shelf on which the product or product part to be picked is located.

When the appropriate product has been withdrawn in the preordered number, the operator places the products in a container or basket destined for the respective client or customer. In this manner everything required by this latter is ready to be sent to the correct destination.

With existing apparatus or trucks this operation has to be carried out manually, both for withdrawing the product or product part to be picked and for identifying the customer's container. In particular this second operation involves an operational choice.

In a first manner of operating, the operator has to move along the aisle with a basket, withdrawing the various products one after another in the respective required preordered quantities.

Alternatively, he has to carry several baskets variously arranged and stacked on a truck, and continuously move them to identify that relevant to the product in front of which he is positioned, so as to satisfy all the requirements of all the customers to which the baskets relate.

With both the first and second manner of operating, such a sequence of operations involves time wastage and operational discomfort. In this respect, in the one case he has to travel the same path several times with the one basket to effect the required series of withdrawals. In the second case, although the time for the various repetitive paths is saved, he has to continuously manipulate the three or four baskets relative to the orders which he is fulfilling.

Such a manner of operating in a store is relevant for example to a publishing house or a distributor in particular when picking books or magazines to be sent to customers, for example individual bookshops.

An object of the present invention is consequently to define and provide a device or the like able to support several product containers which allows preordered product withdrawal for the various containers in successive steps, without having to manually move the individual containers continuously, and with comfortable, simple and always correct placing of the products in the various predetermined containers.

A further object is to provide a device or the like which can be easily associated with a mechanical store truck of the aforesaid type, such as a shuttle truck.

These and further objects are attained according to the invention by a wheel-mounted device for supporting product containers for preordered withdrawal which is connectable to a store truck and comprises a frame on which there is provided a stepwise-rotating turn-cage carrying a plurality of support plates on which product containers are located, said turn-cage being rotated stepwise by a first motorized linkage and being also provided with a second linkage which counter-rotates said plurality of support plates to maintain them in a nearly horizontal position at each moment during the rotation of said turn-cage.

A wheel-mounted device of the present invention hence automatically positions the required basket or container from a group of baskets or containers in front of the operator, so that they all become filled in a single picking sequence. Their filling is very easily achieved and virtually always at the same height, ie in the region in which the operator is positioned, by virtue of the rotation of the device which supports the group of containers or baskets involved in the preordered withdrawal.

Structural and operational characteristics and advantages of a wheel-mounted device of the present invention will be more apparent from the description of one embodiment thereof given hereinafter by way of non-limiting example with reference to the accompanying drawings, on which:
Figure 1 is a schematic side elevation of a device according to the present invention associated with a shuttle truck carrying the operator in a lowered position in front of one container among those positioned on the device;
Figure 2 is a plan view of that shown in Figure 1, this view being simplified and provided only to improve the understanding of the operation of the device;
Figure 3 is a side elevational view showing a first side of the device of Figure 1, namely that in the direction of the arrow B, the side protection having been removed for a better view of the structure; and
Figure 4 is a side elevational view showing the second side of the device of Figure 1, namely that in the direction of the arrow A, the side protection having been again removed for a better view of the entire structure.

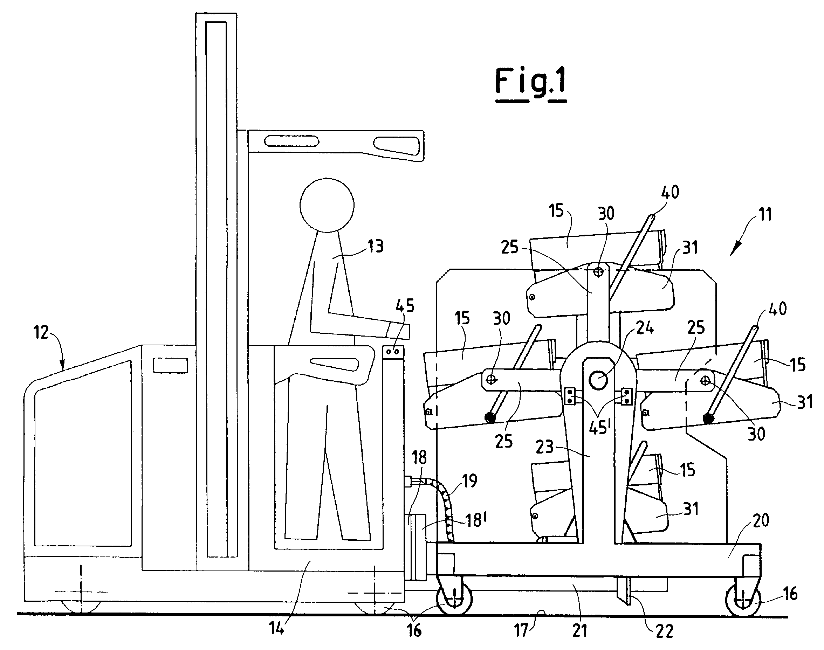

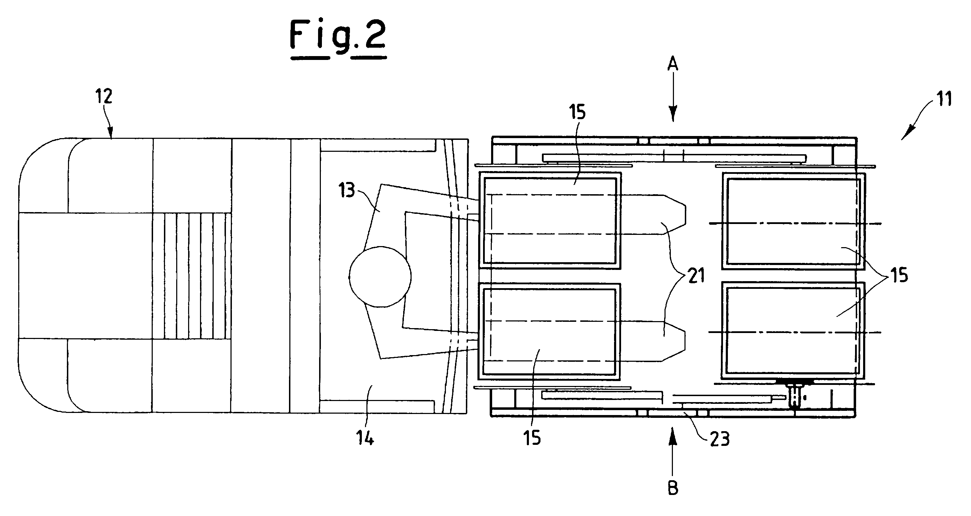

With reference to the drawings, Figures 1 and 2 show a wheel-mounted device, indicated overall by 11, for supporting containers for products or product parts, which is used for their preordered withdrawal and is constructed in accordance with the present invention. The wheel-mounted device 11 is associated with a shuttle truck 12 carrying an operator 13 on a platform 14 raisable from the illustrated lowered position in which he is in front of one container 15 among those positioned on the device 11 of the present invention. Both the device and the shuttle truck are provided with wheels 16 so as to be able to move along store runways, not shown, on a floor 17.

The shuttle truck 12 is provided with a mechanical connector 18 to which a complementary mechanical connector 18' can be connected, and a cable 19 for electrical connection to a connector positioned on the frame 20 of the wheel-mounted device 11. Forks 21 on the shuttle truck can be inserted into sleeves 22 below the frame 20. In this manner the entire device 11 can be raised, together with the platform 14 carrying the operator 13, to the various shelves in the store to enable the preordered withdrawal to be effected.

The frame 20 carries two uprights 23 located on opposite sides and supporting at their end a shaft 24 of a stepwise rotating turn-cage provided with several arms 25. In the vicinity of a first end the shaft 24 comprises a first linkage for rotating the turn-cage. In this respect, to that end of the shaft 24 there is fixed a first sprocket wheel 26 engaged by a chain 27 driven by a second sprocket wheel 28 connected directly to a geared motor 29 positioned on the base of the frame 20. The arms 25 of the turn-cage are therefore rotated directly by said shaft 24, driven by the sprocket wheel 26 with relative motorized transmission 27, 28 and 29.

In the illustrated example the arms 25 are four in number and are defined by two cross-shaped elements positioned at the opposite ends of the shaft 24. The free ends of the arms 25 carry on pivot pins 30 the opposite ends of support plates 31, the external structure of which has a U-shaped cross-section, and by which the baskets or containers 15 are carried on the turn-cage.

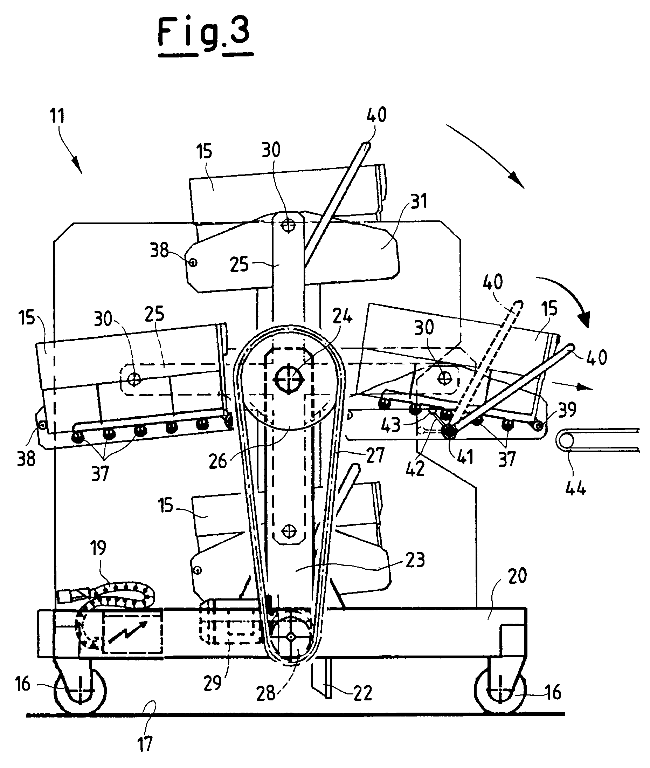

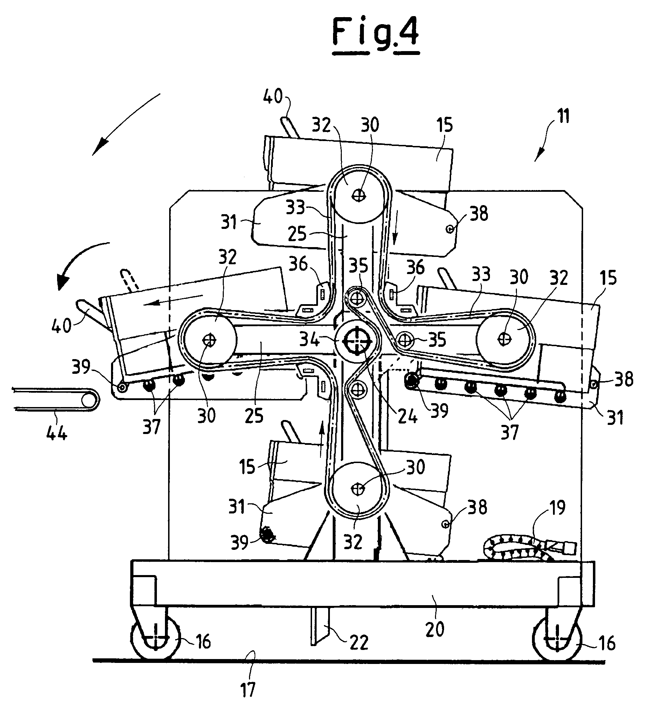

On one side of the device (Figure 3) the pins 30 merely support the support plates 31, whereas on the other side (Figure 4) they also perform a second important function.

In this respect, on said other side of the device structure there is provided a second linkage for rotating the support plates 31 for the containers 15 positioned on the turn-cage. For this purpose the pins 30 on said other side rigidly carry sprocket wheels 32, both being idle on the turn-cage arms 25, whereas they are rigid with the sides of the support plates 31.

A further chain 33 moves stepwise about said sprocket wheels 32 to slowly counter-rotate the support plates 31 relative to the direction of rotation of the turn-cage and of its arms 25, when this is required by the operator 13.

This counter-rotating chain is continuously driven by a sprocket wheel 34 rigid with the turn-cage shaft 24 at that end distant from the end carrying the sprocket wheel 26.

The angle through which the chain 33 engages the sprocket wheel 34 is determined by a series of idle deviation wheels 35, three of which are provided in the example. To achieve a wide angle of engagement about the sprocket wheels 32 rigid with the pins 30, slide shoes 36 for the chain 33 are also provided.

Correct rotation and counter-rotation are determined by a suitable transmission ratio between the teeth of the various gearwheels concerned both in driving the chains and in supporting the support plates 31 for the containers l5.

In addition to the outer casing formed by the external structure of U cross-section, each support plate 31 also comprises a roller table 37. The baskets or containers 15 are moved onto the arms 25 of the turn-cage via the roller table 37.

At one end of the roller table 37 there is a halting crosspiece 38 fixed to the shoulders of the support plates 31. The halting crosspiece 38 retains the loaded container 15 on the respective support plate 31. During the rotation of the turn-cage the support plate structure is preferably slightly inclined towards said end. This facilitates the positioning of the container 15 hard against the halting crosspiece 38 by gravity.

The roller table 37 can also be raised towards the end distant from that towards which the support plate 31 is inclined, for the purpose of discharging the container 15. This is possible because the roller table 37 is pivoted at 39 towards that end and can be raised at the other end. Raising is achieved by a manually operated turnable lever 40. The turnable lever 40, pivoted at 41 to the support plate structure 31, operates a right-angled appendix 42 provided with an end bearing 43. Via the bearing 43, said appendix 42 engages the underside of the roller table 37 to cause it to rotate and partially tilt. The containers 15 positioned on the support plate 31 concerned are discharged in this manner towards a discharge and evacuation conveyor 44.

The operation of such a wheel-mounted device for supporting product containers for preordered withdrawal is totally apparent.

The operator is required to pick a series of products from a multi-shelf store in accordance with an order received from say eight or more customers. For this purpose he positions eight containers or baskets 15 on the wheel-mounted device 11 of the present invention.

He then connects this device to the shuttle truck and begins to travel along the aisles of the store. For example, by raising both his platform 14 and the entire device 11 lying on the forks 21 of the shuttle truck he moves into a position corresponding with a first shelf carrying a first product. There he takes a first determined number of products and deposits them in the first basket 15 located on the first pair of arms 25 and on the respective support plate 31. He then operates a two-pushbutton control on the shuttle truck for rotating the turn-cage in the two directions. The control 45 firstly operates the geared motor 29 with consequent rotation of the chain 27 and of the sprocket wheel 26. This latter rotates through one step of 90° to bring the second support plate 31 to the operator 13, who is then able to deposit the same product but in the basket 15 of the second customer. It should be noted that according to the present invention, during this stepwise rotation the baskets are maintained in a nearly horizontal position by virtue of their counter-rotation. This movement is determined by the second chain 33 and by the elements of the second linkage positioned on the other side of the device.

The same occurs for the next two baskets 15. Hence the operator is not required to manipulate them, but instead controls their position from his operating region, with total comfort.

The same operation is then repeated at all other withdrawal zones, with considerable time saving. Moreover there is no fatigue for the operator, who merely performs a picking operation and controls the geared motor of the device of the present invention.

Finally, having completed the filling of the baskets, ie the preordered product withdrawal, he automatically discharges them.

This is done by the operator operating the levers 40 to raise the roller 37 table at one end and cause the basket mounted thereon to slide by gravity onto the conveyor 44. Again in this case the turn-cage has to be rotated, by operating the said pushbutton control 45. If the operator is at ground level for emptying purposes, the said control 45 is locked and the operator operates a further pushbutton control 45' located on the device 11. This is for reasons of safety and operability.

It is hence apparent that the present invention provides a simple and comfortable solution to the problem of positioning any general spares products or product parts in baskets or containers, this being possible also for books or similar editorial products.

The ease of positioning the baskets in correspondence with the operating region arises from the facility for automatic stepwise guided rotation of the baskets. During this stepwise rotation, the baskets are advantageously maintained in a position nearly parallel to the initial position, avoiding any possible overturning and preventing their accidental discharge from the turn-cage which supports them.

Finally the full baskets are removed with minimum effort from the arms of the turn-cage. Consequently all operations are extremely rapid.

## Claims

1. A wheel-mounted device for supporting product containers for preordered withdrawal which is connectable to a store truck and comprises a frame (20) on which there is provided a stepwise-rotating turn-cage (24, 25) carrying a plurality of support plates (31) on which containers for products (15) are located, said turn-cage being rotated stepwise by a first motorized (at 29) linkage (26, 27, 28) and being also provided with a second linkage (32, 33; 34, 35, 36) which counter-rotates said plurality of support plates (31) to maintain them in a nearly horizontal position at each moment during the rotation of said turn-cage.

2. A device as claimed in claim 1, characterised in that said first linkage comprises a sprocket wheel (26) rigid with a shaft (24) of said turn-cage, which is provided with several arms (25) to which said support plates (31) are rotatably pivoted, a transmission chain (27) and a second sprocket wheel (28) connected directly to a geared motor (29).

3. A device as claimed in claim 1, characterised in that said second linkage comprises a further chain (33) which acts by rotating about sprocket wheels (32) rigid with pins (30) fixed to said support plates (31), said pins being idly mounted on said turn-cage, there being provided a further sprocket wheel (34) rigid with a shaft (24) of said turn-cage and about which said chain engages via deviation wheels (35).

4. A device as claimed in claim 3, characterised in that said further chain (33) is deviated by slide shoes (36) to achieve a large angle of engagement about said sprocket wheels (32) rigid with said pins (30) fixed to said support plates (31).

5. A device as claimed in claim 1, characterised in that each of said support plates (31) has an external structure of U cross-section.

6. A device as claimed in claim 1, characterised in that each of said support plates (31) is provided with a roller table (37) on which the respective container (15) rests.

7. A device as claimed in claim 6, characterised in that at one end of each roller table (37) there is positioned a halting crosspiece (38) fixed to shoulders of said support plates (31).

8. A device as claimed in claim 7, characterised in that each of said support plates (31) is slightly inclined towards said halting crosspiece (38) during the rotation of the turn-cage.

9. A device as claimed in claim 6, characterised in that said roller table (37) is rotatable about its support plate (31) by being pivoted (at 39) at one end, and is raisable at its other end by a turnable lever (40) which acts on the underside of said roller table (37).

10. A device as claimed in claim 9, characterised in that said turnable lever (40) extends into a right-angled appendix (42) provided with an end roller (43) which acts on the underside of said roller table (37).

11. A device as claimed in claim 1, characterised by comprising at least one pushbutton control (45, 45') which operates a motor (29) enabling said turn-cage to be rotated in the two directions of rotation.

12. A device as claimed in claim 11, characterised in that said pushbutton control (45, 45') is provided both on said store truck (12) and on said device (11).
